# EUROPEAN PATENT APPLICATION

(11) **EP 4 617 028 A1**
(43) Date of publication of application: **17.09.2025**
(21) Application number: 23888765.7
(22) Date of filing: 09.11.2023
(51) Int. Cl.: B29B 11/08, B29C 45/37, B65D 1/02, B29C 33/42, B29C 49/06, B29C 49/22

(54) **PEELABLE CONTAINER, PREFORM, AND MANUFACTURING METHOD AND MANUFACTURING DEVICE FOR PEELABLE CONTAINER**

(30) Priority: 11.11.2022 JP 2022181251; 05.10.2023 JP 2023173815
(71) Applicant: Nissei ASB Machine Co., Ltd., Komoro-shi, Nagano 384-8585 (JP)
(72) Inventor: OIKE Toshiteru, Komoro-shi, Nagano 384-8585 (JP)
(74) Representative: Mewburn Ellis LLP
(86) International application number: PCT/JP2023/040391
(87) International publication number: WO 2024/101420

(57) **Abstract**

A delamination container includes a neck portion opened on one side and a bottomed cylindrical body portion connected to the neck portion, in which an inner layer is laminated on an inner side of an outer layer. The neck portion of the inner layer includes: a first region that is injection-molded in close contact with an inner periphery of the neck portion of the outer layer; a second region that is formed on one side of the first region and is injection-molded in a state of protruding from the neck portion of the outer layer; and a protruding body that is formed on an outer periphery of the second region and peels off the inner layer and the outer layer from each other from one side of the neck portion when the second region is pushed to the other side toward the neck portion of the outer layer.

## Description

### Technical Field

The present invention relates to a delamination container, a preform, a method for manufacturing the delamination container, and an apparatus for manufacturing the delamination container.

### Background Art

Conventionally, resin-made containers have been applied to various applications, and various resin-made containers each having a plurality of resin layers have also been put to practical use. For example, there is known a resin-made delamination container having a two-layer structure of an inner layer and an outer layer, in which the inner layer is peeled from the outer layer according to discharge of contents. This type of delamination container is also referred to as an airless bottle, and is used, for example, as a container of a seasoning liquid such as soy sauce, a cosmetic liquid of cosmetics, a liquid detergent such as shampoo or hand soap, or a liquid chemical used for disinfection, sterilization, and the like.

In this type of delamination container, a lid body including a check valve and the like is attached to a mouth portion of the inner layer, and a vent for introducing outside air between the inner layer and the outer layer is formed in the outer layer. Here, a method is known in which a preform of an inner layer and a preform of an outer layer are separately injection-molded, and a preform assembly in which the preform of the outer layer and the preform of the outer layer are fitted to each other at normal temperature is reheated and then blow molded to manufacture a delamination container (for example, Patent Literatures 1 to 4). In the manufacturing methods of Patent Literatures 1 to **4,** a vent of a delamination container is generally formed in a neck portion of the delamination container.

On the other hand, Patent Literature 5 proposes a method for manufacturing a delamination container by continuously forming a preform of an outer layer and a preform of an inner layer in one manufacturing apparatus and performing biaxial stretch blow molding in a state where the inner layer and the outer layer each have residual heat from injection molding. In the method for manufacturing a delamination container of Patent Literature **5,** a delamination container excellent in aesthetic appearance, physical property strength, and the like can be mass-produced in a short manufacturing cycle. For example, in the manufacturing method of Patent Literature **5,** a vent of the outer layer is formed at a bottom portion of the delamination container.

### Citation List

### Patent Literature

Patent Literature 1: JP 628729 B2
Patent Literature 2: JP 6712490 B2
Patent Literature 3: JP 6991674 B2
Patent Literature 4: JP 2021-172404 A
Patent Literature 5: WO 2021/206082 A

### Summary of Invention

### Technical Problem

In Patent Literature **5,** a recess corresponding to the vent is formed in an outer layer-side bottom portion of the two-layer preform, and the preform is blow-molded to form the vent in a bottom portion of the delamination container. However, in order to cause the vent as a vent of the delamination container, it is necessary to suppress the stretching amount of the bottom portion of the two-layer preform such that a recess of a bottom portion of the outer layer is not largely deformed.

In addition, in the manufacturing method of Patent Literature **5,** since the inner layer and the outer layer of the two-layer preform are integrally stretched, the stretching amount of a bottom portion of the preform of the inner layer is also reduced, and as a result, a bottom portion of the inner layer container is thick. Therefore, the manufacturing method of Patent Literature 5 has room for improvement in that, for example, when the inner layer and the outer layer of the delamination container are separated from each other and materials thereof are reused, the inner layer container is hardly pulled out from a neck portion of the outer layer container.

Therefore, the present invention has been made in view of such a problem, and an object of the present invention is to provide a delamination container that can be mass-produced in a short manufacturing cycle and facilitates separation of an inner layer and an outer layer.

### Solution to Problem

One aspect of the present invention is a delamination container including a neck portion opened on one side and a bottomed cylindrical body portion connected to the neck portion, in which an inner layer is laminated on an inner side of an outer layer. The neck portion of the inner layer includes: a first region that is injection-molded in close contact with an inner periphery of the neck portion of the outer layer; a second region that is formed on one side of the first region and is injection-molded in a state of protruding from the neck portion of the outer layer; and a protruding body that is formed on an outer periphery of the second region and peels off the inner layer and the outer layer from each other from one side of the neck portion when the second region is pushed to the other side toward the neck portion of the outer layer.

### Advantageous Effects of Invention

According to one aspect of the present invention, it is possible to provide a delamination container that can be mass-produced in a short manufacturing cycle and facilitates separation of an inner layer and an outer layer.

### Brief Description of Drawings

Fig. 1 is a cross-sectional view illustrating a configuration example of a preform of a first embodiment.
Fig. 2(a) is a cross-sectional view taken along line A-A of Fig. 1, and Fig. 2(b) is a cross-sectional view taken along line B-B of Fig. 1.
Fig. 3 is a cross-sectional view illustrating a configuration example of a delamination container of the first embodiment.
Fig. 4(a) is a view illustrating the vicinity of a neck portion of the delamination container of Fig. 3, and Fig. 4(b) is a view illustrating a state where an axially protruding portion is pushed from Fig. 4(a).
Fig. 5 is a cross-sectional view taken along line C-C of Fig. 4(b).
Fig. 6 is a diagram schematically illustrating a configuration of a blow molding apparatus of the first embodiment.
Fig. 7 is a diagram illustrating a configuration example of a first injection molding unit.
Fig. 8 is a view illustrating a protruding state of a valve pin in the first injection molding unit.
Fig. 9 is a diagram illustrating a configuration example of a second injection molding unit.
Fig. 10 is a flowchart indicating steps of a method for manufacturing a container.
Fig. 11 is a perspective view illustrating the shape of a neck portion of a preform and a delamination container of a second embodiment.
Fig. 12(a) is a cross-sectional view illustrating the vicinity of the neck portion of the delamination container, and Fig. 12(b) is a view illustrating a state where an inner layer is pushed in an axial direction from Fig. 12 (a) .

### Description of Embodiments

Hereinafter, embodiments of the present invention will be described with reference to the drawings.

In the embodiments, for easy understanding, structures and elements of parts other than a main part of the present invention will be described in a simplified or omitted manner. In the drawings, the same elements are denoted by the same reference numerals. Note that the shapes, dimensions, and the like of elements illustrated in the drawings are schematically illustrated, and do not indicate actual shapes, dimensions, and the like.

### <<First Embodiment>>

### <Configuration Example of Preform>

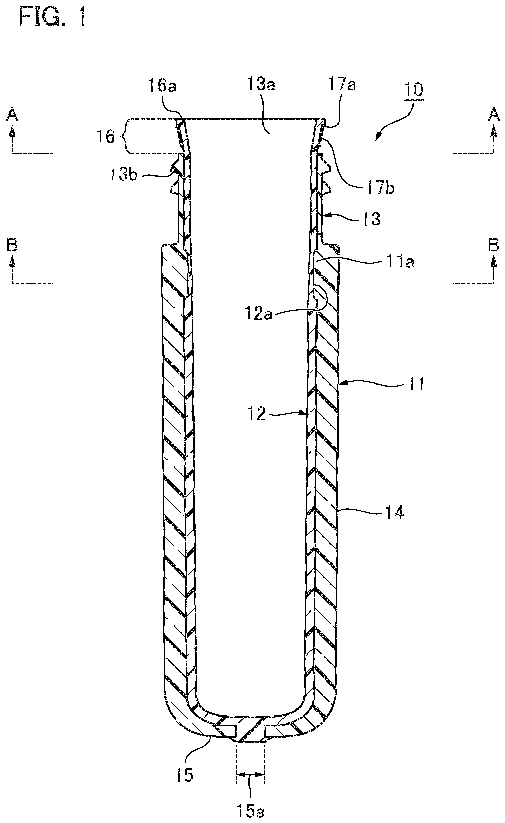

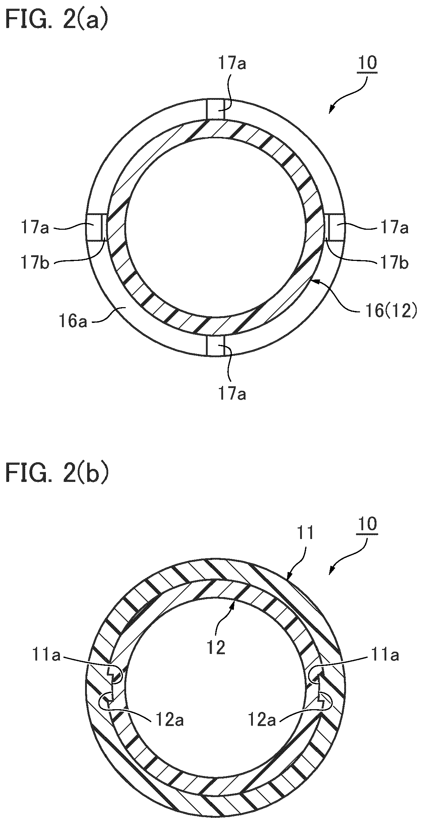

First, a configuration example of a preform for a delamination container according to a first embodiment will be described with reference to Figs. 1 and 2. Fig. 1 is a cross-sectional view illustrating a configuration example of a preform 10 according to the first embodiment. Fig. 2(a) is a cross-sectional view taken along line A-A of Fig. 1, and Fig. 2(b) is a cross-sectional view taken along line B-B of Fig. 1.

The entire shape of the preform 10 is a bottomed cylindrical shape in which a mouth portion 13a on one side is opened and the other side is closed. The preform 10 includes a body portion 14 formed in a cylindrical shape, a bottom portion 15 that closes the other side of the body portion 14, and a neck portion 13 formed on one side of the body portion 14 and including the mouth portion 13a. Note that a thread 13b is formed on an outer peripheral surface of the neck portion 13.

The preform 10 has a two-layer structure in which an inner layer 12 is laminated on an inner side of an outer layer 11. The outer layer 11 and the inner layer 12 are made of different thermoplastic resin materials by two-stage injection molding as described later. The outer layer 11 is made of a synthetic resin (resin material) having excellent moldability and transparency. On the other hand, the inner layer 12 is made of a synthetic resin (resin material) having a property of stably storing contents of the container and being able to suppress deterioration (oxidation) (for example, moisture barrier property, gas barrier property, heat resistance, and chemical resistance). As the resin material of the outer layer 11, a resin material having a melting point higher than that of the resin material of the inner layer 12 is selected.

Hereinafter, the resin material of the outer layer 11 is also referred to as a first resin material, and the resin material of the inner layer 12 is also referred to as a second resin material.

A combination of the first resin material and the second resin material can be appropriately selected according to specifications of the delamination container. Specific examples of the type of the material include PET (polyethylene terephthalate), PEN (polyethylene naphthalate), PCTA (polycyclohexanedimethylene terephthalate), Tritan (registered trademark, co-polyester manufactured by Eastman Chemical Co., Ltd.), PP (polypropylene), PE (polyethylene), PC (polycarbonate), PES (polyethersulfone), PPSU (polyphenylsulfone), PS (polystyrene), COP/COC (cyclic olefin-based polymer), PMMA (polymethyl methacrylate: acrylic), and PLA (polylactic acid).

As an example, the first resin material is PET (polyethylene terephthalate), and the second resin material is PP (polypropylene). A melting point of PP is about 160 to 170°C, and a melting point of PET is higher than that of PP and is about 245 to 260°C.

On one side of the preform 10, the inner layer 12 on an inner peripheral side has an axially protruding portion 16 that is injection-molded so as to protrude to one side further than an end portion of the outer layer 11 on an outer peripheral side. Therefore, the axial length of the neck portion in the inner layer 12 is longer than the axial length of the neck portion of the outer layer 11 by the amount of the axially protruding portion 16. Note that a portion of the neck portion 13 of the inner layer 12, the portion being injection-molded in close contact with the outer layer, is an example of the first region, and the axially protruding portion 16 is an example of the second region.

In addition, an annular flange 16a protruding radially outward is formed at a one-side end portion of the axially protruding portion 16 of the inner layer 12. In addition, a first rib 17a and a second rib 17b are formed on an outer periphery of the axially protruding portion 16.

The first rib 17a is an example of a spacer, is formed on a lower surface of the flange 16a (a surface on the other side of the flange 16a), and extends radially outward of the preform 10. The first rib 17a has a protruding shape and protrudes downward from a flat portion of the lower surface of the flange 16a. A plurality of the first ribs 17a is formed on the lower surface of the flange 16a, for example, so as to form a radial shape with respect to an axial center of the preform 10. Fig. 2(a) illustrates an example in which four first ribs 17a are formed on the flange 16a at intervals of 90 degrees. However, the number and arrangement intervals of the first ribs 17a are not limited to those described above.

The second rib 17b is an example of the protruding body, and extends in an axial direction at a position on the other side of the lower surface of the flange 16a on an outer periphery of the axially protruding portion 16. The second rib 17b has a protruding shape and protrudes toward an outer peripheral side from a horizontal portion of the outer periphery of the axially protruding portion 16. One or more second ribs 17b are partially formed in a circumferential direction of the axially protruding portion 16, and for example, a plurality of the second ribs are formed on the outer periphery of the axially protruding portion 16 at regular intervals in the circumferential direction. Note that two or more second ribs 17b may be formed at equal intervals on the outer periphery of the axially protruding portion 16. In particular, it is preferable to form four or more second ribs 17b at equal intervals on the outer periphery of the axially protruding portion 16.

A radial protrusion amount of the second rib 17b (the height of the second rib 17b from an outer peripheral surface of the axially protruding portion 16) is set to a dimension by which the second rib 17b and the axially protruding portion 16 can be inserted into an inner periphery of the outer layer 11 when the flange 16a is pressed toward the other side to push the axially protruding portion 16 into the outer layer 11 as described later. Note that an inclined surface in which the radial protrusion amount of the rib increases from the other side toward one side (from a lower side to an upper side in Fig. 1) may be formed on the other side of the second rib 17b. A lower end (end on the other side) of the second rib 17b and an upper end surface (end on one side) of the neck portion 13 of the outer layer 11 are separated from each other. As a result, an outer peripheral surface (annular surface) of the axially protruding portion 16 without the second rib 17b is formed between the lower end of the second rib 17b and the upper end surface of the neck portion 13 of the outer layer 11.

Fig. 2(a) illustrates an example in which two second ribs 17b are formed at intervals of 180 degrees. However, the number and arrangement intervals of the second ribs 17b are not limited to those described above. In addition, the second rib 17b does not need to be formed at a position overlapping the first rib 17a, and the first rib 17a and the second rib 17b may be formed with phases shifted in a circumferential direction. Note that the second rib 17b may have a shape extending obliquely and inclined from an axial direction.

In a region adjacent to the neck portion 13 in the body portion 14 of the preform 10 (hereinafter, also referred to as a region below the neck), a protruding portion 11a extending in an axial direction is formed on an inner periphery of the outer layer 11. On an outer periphery of the inner layer 12, a groove portion 12a that receives the protruding portion 11a is formed at a position corresponding to the protruding portion 11a. A plurality of the protruding portions 11a and a plurality of the groove portions 12a are formed at predetermined intervals in a circumferential direction of the preform 10. Fig. 2(b) illustrates an example in which two protruding portions 11a and two groove portions 12a are formed at intervals of 180 degrees. However, the number and arrangement intervals of the protruding portions 11a and the groove portions 12a are not limited to those described above.

Figs. 2(a) and 2(b) illustrate an example in which, in an axial direction of the preform 10, the positions of the second ribs 17b in a circumferential direction coincide with the positions of the protruding portions 11a and the groove portions 12a in the circumferential direction. However, the positions of the second ribs 17b in the circumferential direction may be shifted from the positions of the protruding portions 11a and the groove portions 12a in the circumferential direction.

In addition, in the bottom portion 15 of the preform 10, an opening portion 15a is formed through the outer layer 11 at a center of a bottom portion of the outer layer 11. The opening portion 15a of the outer layer 11 is closed from the inside by the inner layer 12.

### <Configuration Example of Delamination container>

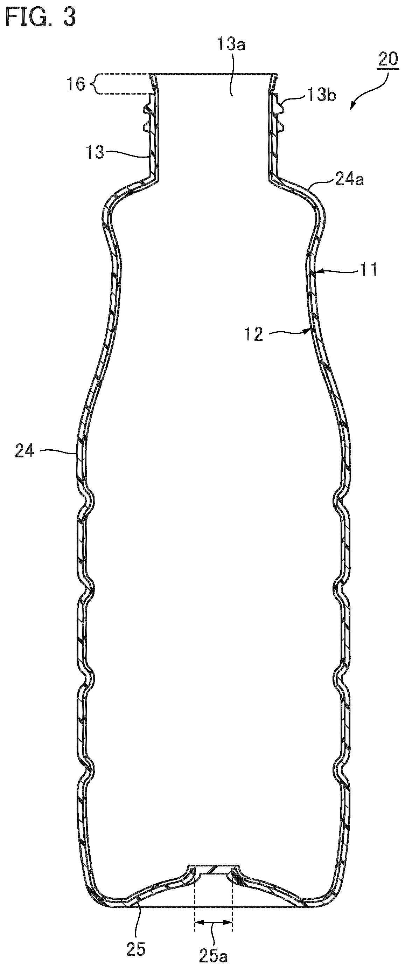

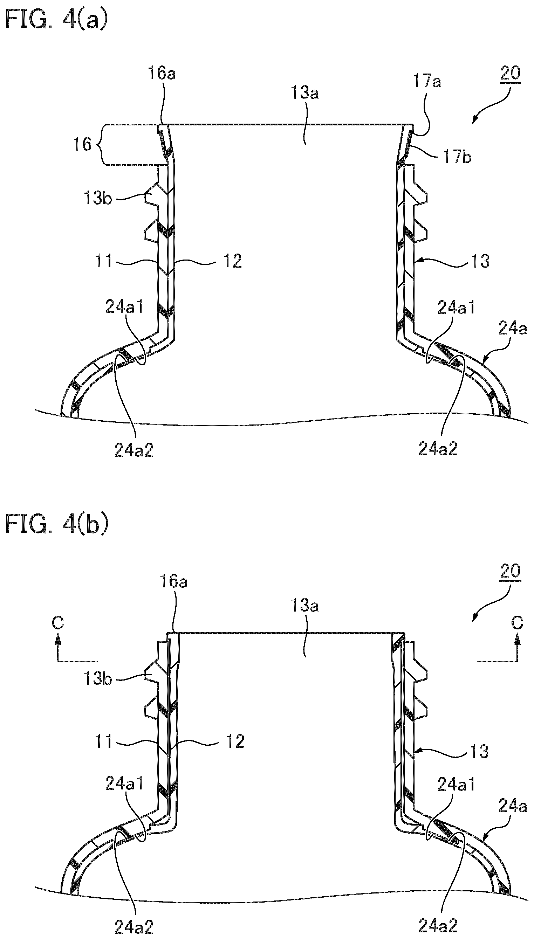

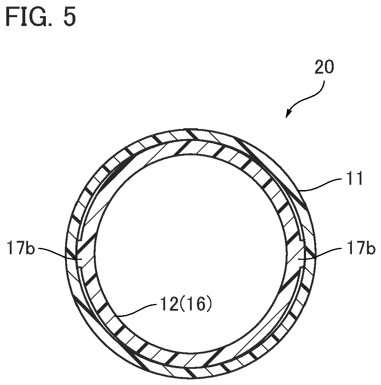

Next, a configuration example of a resin-made delamination container 20 according to the first embodiment will be described with reference to Figs. 3, 4, and 5. Fig. 3 is a cross-sectional view illustrating a configuration example of the delamination container 20 of the first embodiment. Fig. 4(a) is a view illustrating the vicinity of a neck portion of the delamination container 20 of Fig. 3, and Fig. 4(b) is a view illustrating a state where the axially protruding portion 16 is pushed from Fig. 4(a). Fig. 5 is a cross-sectional view taken along line C-C of Fig. 4(b).

The delamination container 20 is a bottle-shaped resin-made container obtained by subjecting the preform 10 to stretch blow molding, and contains, for example, a seasoning liquid such as soy sauce. Note that the delamination container 20 may be used to store other contents such as a cosmetic liquid of cosmetics.

Similarly to the preform 10, the delamination container 20 has a two-layer structure in which an inner layer 12 is laminated on an inner side of an outer layer 11. The delamination container 20 includes a neck portion 13 having an axially protruding portion 16, a cylindrical body portion 24, a shoulder portion 24a connecting the neck portion 13 and one side of the body portion 24, and a bottom portion 25 closing the other side of the body portion 24.

In manufacture of the delamination container 20, the body portion 14 and the bottom portion 15 of the preform 10 are swelled by stretch blow, whereby the shoulder portion 24a, the body portion 24, and the bottom portion 25 of the delamination container 20 are shaped. In addition, the protruding portion 11a and the groove portion 12b of the preform 10 are stretched, whereby a protruding portion 24a1 extending in an axial direction is formed on an inner peripheral side of the outer layer 11 and a groove portion 24a2 that receives the protruding portion 24a1 is formed on an outer peripheral side of the inner layer 12 in the shoulder portion 24a of the delamination container 20 (see Figs. 4(a) and 4(b)). The protruding portion 24a1 and the groove portion 24a2 are examples of a slip preventing portion.

On the other hand, the neck portion 13 of the preform 10 is held by a neck mold 37b described later during blow molding, and the shape thereof is maintained as it is. Therefore, as illustrated in Fig. 4(a), the neck portion 13 and the axially protruding portion 16 of the delamination container 20 have similar configurations to those of the neck portion 13 and the axially protruding portion 16 of the preform 10 described above. A cap (not illustrated) that seals the inner layer 12 and includes a check valve is attached to the neck portion 13 of the delamination container 20 via a thread 13b.

In the delamination container 20 after blow molding, the outer layer 11 and the inner layer 12 of the neck portion 13 are in close contact with each other. When the cap is attached to the neck portion 13, as illustrated in Fig. 4(b), the flange 16a is pressed from an upper side toward the other side by the cap (not illustrated), whereby the axially protruding portion 16 of the inner layer 12 is pushed toward the outer layer 11. On the other hand, in the shoulder portion 24a of the delamination container 20, the protruding portion 24a1 of the outer layer 11 comes into contact with the groove portion 24a2 of the inner layer 12, and generates a reaction force against a force of pushing the flange 16a.

As a result, when the axially protruding portion 16 of the inner layer 12 is pushed into the other side with respect to the outer layer 11 of the neck portion 13 with a certain force or more, the second rib 17b is inserted into the outer layer 11 together with the axially protruding portion 16. At this time, as illustrated in Fig. 5, the second rib 17b comes into contact with an inner periphery of the outer layer 11, whereby the axially protruding portion 16 is pushed toward an inner diameter side and is slightly narrowed, and is displaced such that a cross section thereof has an elliptical shape or a substantially polygonal shape. As a result, peeling between the outer layer 11 and the inner layer 12 starts from one side in the neck portion 13 of the delamination container 20. In addition, a gap is ensured between the outer layer 11 and the inner layer 12 by the second rib 17b coming into contact with an inner peripheral surface of the outer layer 11. In addition, by rotating the cap engaged with the thread 13b of the outer layer 11 to lower the cap, when the flange 16a is pressed from an upper side toward the other side by the cap, positional deviation (relative rotation) between the outer layer 11 and the inner layer 12 can be suppressed.

When the axially protruding portion 16 is further pushed from the above state, peeling between the outer layer 11 and the inner layer 12 further spreads downward. As illustrated in Fig. 4(b), when peeling between the outer layer 11 and the inner layer 12 progresses to the vicinity of the shoulder portion 24a of the delamination container 20, the inner layer 12 bends inward at a boundary between the neck portion 13 and the shoulder portion 24a, and the groove portion 24a2 of the inner layer 12 abuts on the protruding portion 24a1 of the shoulder portion 24a, whereby peeling is completed.

In addition, in a state where the axially protruding portion 16 is pushed, the first rib 17a is sandwiched between the flange 16a and a one-side end portion of the outer layer 11. Therefore, in the one-side end portion of the outer layer 11, the first rib 17a serves as a spacer between the flange 16a and the outer layer 11, whereby a ventilation passage communicating with the gap is formed. As described above, in the first embodiment, by pushing the flange 16a toward the other side, it is possible to form a ventilation passage through which outside air is introduced between the outer layer 11 and the inner layer 12 in the neck portion 13 of the delamination container 20.

In the delamination container 20, contents are filled into an inner space of the inner layer 12. In the delamination container 20, when the contents are discharged from the inner layer 12, air gradually flows into a space between the outer layer 11 and the inner layer 12 from the ventilation passage, and the outer layer 11 and the inner layer 12 are peeled off from each other. As a result, a volume occupied by the contents in the container can be replaced with air without bringing the contents of the inner layer 12 into contact with air, and the contents filled into the inner layer 12 can be discharged to the outside of the container.

Note that, as in the preform 10, an opening portion 25a (non-laminated portion, single layer portion) penetrating the outer layer 11 is formed at a center of the bottom portion 25 of the delamination container 20. A material of the inner layer 12 is filled into the opening portion 25a so as to close the opening portion 25a, and the inner layer 12 is exposed to the outside of the outer layer 11 in the vicinity of the opening portion 25a of the bottom portion 25 of the delamination container 20. The inner layer 12 is exposed to the outside at the opening portion 25a of the delamination container **20,** whereby the inner layer 12 is partially fixed to the outer layer **11,** and positional deviation of the inner layer 12 with respect to the outer layer 11 is suppressed.

### <Description of Apparatus for Manufacturing delamination container>

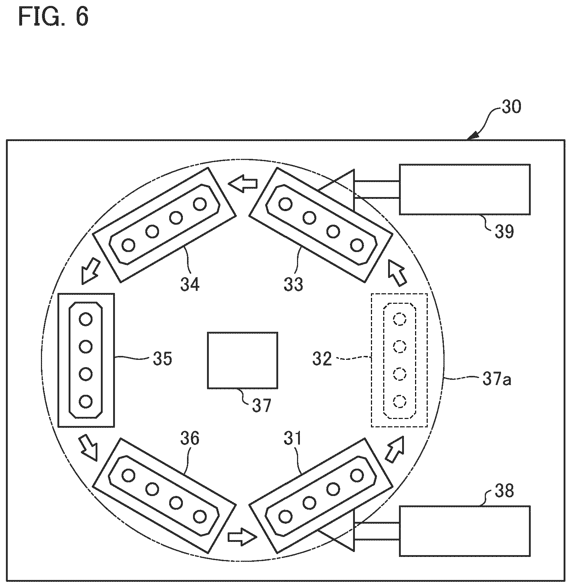

**Fig.** 6 is a diagram schematically illustrating a configuration of a blow molding apparatus 30 of the first embodiment. The blow molding apparatus 30 of the first embodiment is an example of an apparatus for manufacturing the delamination container **20,** and adopts a hot parison type (also referred to as one stage type) that blow-molds the delamination container 20 by utilizing residual heat (internal heat quantity) from injection molding without cooling the preform 10 to room temperature.

The blow molding apparatus 30 includes a first injection molding unit 31, a first temperature adjusting unit 32, a second injection molding unit 33, a second temperature adjusting unit 34, a blow molding unit 35, a taking-out unit 36, and a conveyance mechanism 37. The first injection molding unit 31, the first temperature adjusting unit 32, the second injection molding unit 33, the second temperature adjusting unit 34, the blow molding unit 35, and the taking-out unit 36 are disposed at positions in which one position is obtained by rotation of an adjacent position by the same predetermined angle (for example, 60 degrees) around the conveyance mechanism 37. Note that the blow molding apparatus 30 may omit the first temperature adjusting unit 32. In this case, the molding stations are disposed in which one position is obtained by rotation of an adjacent position by 72 degrees around the conveyance mechanism 37.

In each of the first injection molding unit 31 and the second injection molding unit 33, a core mold lifting and lowering mechanism (not illustrated) is disposed above the conveyance mechanism 37.

### (Conveyance mechanism 37)

The conveyance mechanism 37 includes a transfer plate 37a that rotates around an axis in a direction perpendicular to a paper surface of Fig. **6****.** On the transfer plate 37a, one or more neck molds 37b (not illustrated in Fig. 6) that hold the neck portion 13 of the preform 10 (or the delamination container 20) are disposed at each predetermined angle.

The neck mold 37b defines the shape of the neck portion 13 of the outer layer 11 in the first injection molding unit 31. In the second injection molding unit 33, the neck mold 37b defines the outer peripheral shape of the axially protruding portion 16 of the inner layer 12, the shapes of an outer peripheral surface and a lower surface of the flange 16a, and the shapes of the first rib 17a and the second rib 17b.

The conveyance mechanism 37 conveys the preform 10 (or the delamination container 20) held by the neck mold 37b in order of the first injection molding unit 31, the first temperature adjusting unit 32, the second injection molding unit 33, the second temperature adjusting unit 34, the blow molding unit 35, and the taking-out unit 36 by moving the position of the transfer plate 37a in a rotation direction. Note that the conveyance mechanism 37 can also move up and down the transfer plate 37a, and also performs operations related to mold closing and mold opening (mold releasing) in the first injection molding unit 31 and the second injection molding unit 33.

### (First injection molding unit 31)

The first injection molding unit 31 includes a cavity mold 40 and a core mold 41, and manufactures the outer layer 11 of the preform 10 in cooperation with the neck mold 37b conveyed during molding. The first injection molding unit 31 is connected to a first injection device 38 that supplies the first resin material via a hot runner mold (not illustrated). The cavity mold 40 is fixed to a machine base of the blow molding apparatus 30, and the core mold 41 is fixed to the core mold lifting and lowering mechanism.

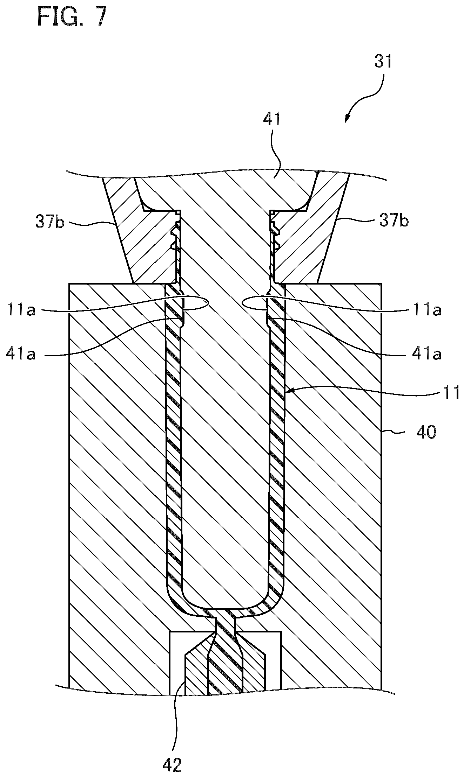

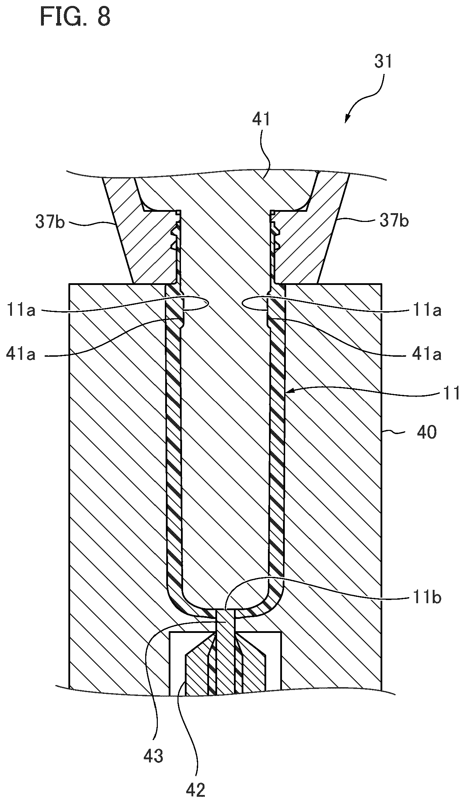

Figs. 7 and 8 are diagrams illustrating the first injection molding unit 31 that molds the outer layer 11 of the preform 10.

The cavity mold 40 is a mold that defines the outer peripheral shape of the outer layer 11. A resin supply unit 42 that introduces the first resin material plasticized (melted) by the first injection device 38 into the cavity mold 40 is connected to a bottom portion of the cavity mold 40.

The core mold 41 is a mold that defines the shape of an inner peripheral side of the outer layer 11, and is inserted into an inner periphery of the cavity mold 40 from an upper side. In the core mold 41, a groove 41a corresponding to the protruding portion 11a of the outer layer 11 is formed in an axial direction in a region corresponding to a region below the neck of the outer layer 11.

The resin supply unit 42 includes a valve pin 43 that is movable in the axial direction to a position close to the core mold 41. The valve pin 43 is a rod-like member that opens and closes the resin supply unit 42, and is accommodated inside so as not to protrude from the resin supply unit 42 until the first resin material is filled into a mold space. After the first resin material is filled into the mold space, the valve pin 43 protrudes to a position close to the core mold 41 as illustrated in Fig. 8. By such movement of the valve pin 43 during injection molding, a thin film portion 11b in which the thickness of the resin material is thinner than that of a peripheral portion can be formed at a center of a bottom portion of the outer layer 11.

As illustrated in Figs. 7 and 8, in the first injection molding unit 31, the cavity mold 40, the core mold 41, and the neck mold 37b of the conveyance mechanism 37 are closed to form a mold space of the outer layer 11. Then, by injecting the first resin material from a bottom portion of the mold space via the resin supply unit 42, the outer layer 11 of the preform 10 is manufactured in the first injection molding unit 31.

Even when the molds of the first injection molding unit 31 are opened, the neck mold 37b of the conveyance mechanism 37 is not opened, and holds and conveys the outer layer 11 of the preform 10 as it is. The number of the preforms 10 simultaneously molded by the first injection molding unit 31 (that is, the number of the delamination containers 20 that can be simultaneously molded by the blow molding apparatus 30) can be appropriately set.

### (First temperature adjusting unit 32)

The first temperature adjusting unit 32 includes a temperature adjusting mold (a heating pot or a temperature adjusting pot that externally adjusts the temperature of the outer layer **11,** and a heating rod or a temperature adjusting rod (or an air introduction rod) that internally adjusts the temperature of the outer layer 11) not illustrated. The first temperature adjusting unit 32 cools (or heats) the outer layer 11 in a high temperature state after injection molding by accommodating the outer layer 11 in the temperature adjusting mold maintained at a predetermined temperature. The first temperature adjusting unit 32 also has a function of adjusting a temperature distribution of the outer layer 11 to a predetermined state before the outer layer 11 is conveyed to the second injection molding unit 33.

### (Second injection molding unit 33)

The second injection molding unit 33 includes a cavity mold 50 and a core mold 51, and injection-molds the inner layer 12 on an inner peripheral side of the outer layer 11 in cooperation with the neck mold 37b conveyed during molding. The second injection molding unit 33 is connected to a second injection device 39 that supplies the second resin material via a hot runner mold (not illustrated). The cavity mold 50 is fixed to a machine base of the blow molding apparatus 30, and the core mold 51 is fixed to the core mold lifting and lowering mechanism.

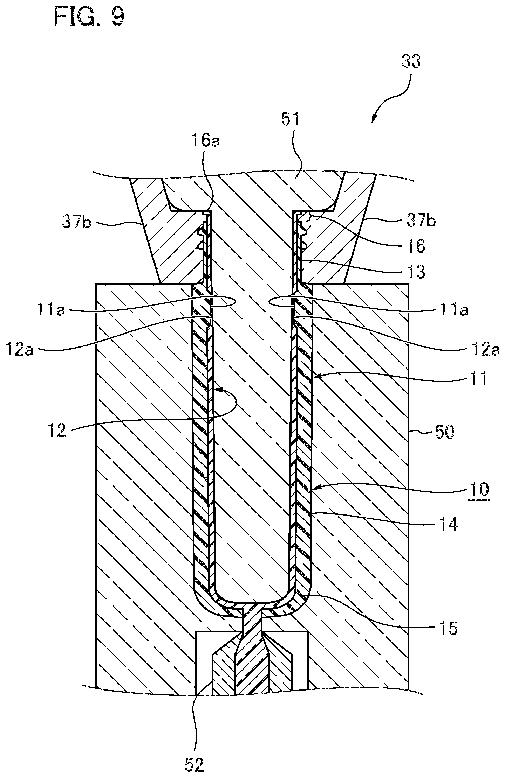

Fig. 9 is a diagram illustrating the second injection molding unit 33 that molds the inner layer 12 of the preform 10.

The cavity mold 50 is a mold that accommodates the outer layer 11. A resin supply unit 52 that introduces the second resin material plasticized (melted) by the second injection device 39 into the cavity mold 50 is connected to a bottom portion of the cavity mold 50. The core mold 51 is a mold that defines the shapes of inner peripheral sides of the inner layer 12 and the axially protruding portion 16 and the shape of an upper surface of the flange 16a, and is inserted into an inner periphery of the cavity mold 50 from an upper side.

As illustrated in Fig. 9, the second injection molding unit 33 accommodates the outer layer 11 of the preform 10 injection-molded by the first injection molding unit 31. In a state where the molds of the second injection molding unit 33 are closed, a mold space is formed between an inner periphery of the outer layer 11 and surfaces of the neck mold 37b and the core mold 51. Then, by injecting the second resin material from a bottom portion of the mold space via the resin supply unit 52, the inner layer 12 is laminated on an inner peripheral side of the outer layer 11 in the second injection molding unit 33 to manufacture the preform 10 having the axially protruding portion 16.

In a state where the molds of the second injection molding unit 33 are closed, a molding space (cavity) corresponding to the first rib 17a and a molding space corresponding to the second rib 17b are formed in the molds (not illustrated). In addition, between the molding spaces at a lower end (end on the other side) of the second rib 17b and an upper end surface (end on one side) of the neck portion 13 of the outer layer 11, a protruding portion of an inner peripheral surface of the neck mold 37b of the neck portion 13 of the inner layer 12 and an outer peripheral surface of the core mold 51 are closest to each other to form a molding space corresponding to an outer peripheral surface (annular surface) of the axially protruding portion 16 without the second rib 17b.

### (Second temperature adjusting unit 34)

The second temperature adjusting unit 34 includes a temperature adjusting mold (a heating pot or a temperature adjusting pot that externally adjusts the temperature of the preform 10, and a heating rod or a temperature adjusting rod (or an air introduction rod) that internally adjusts the temperature of the preform 10) not illustrated. By accommodating the preform 10 conveyed from the second injection molding unit 33 in a mold unit maintained at a predetermined temperature, the second temperature adjusting unit 34 performs temperature equalization and removal of uneven temperature, and adjusts the temperature of the preform 10 to a temperature suitable for final blowing (for example, about 90°C to 105°C). The second temperature adjusting unit 34 also has a function of cooling the preform 10 in a high temperature state after injection molding.

### (Blow molding unit 35)

The blow molding unit 35 blow-molds the preform 10 whose temperature has been adjusted by the second temperature adjusting unit 34 to manufacture the delamination container 20.

The blow molding unit 35 includes a blow cavity mold which is a pair of split molds corresponding to the shape of the delamination container 20, a bottom mold, a stretching rod, and an air introduction member (none of which is illustrated). The blow molding unit 35 blow-molds the preform 10 while stretching the preform 10. As a result, the preform 10 is shaped into the shape of a blow cavity mold, whereby the delamination container 20 can be manufactured.

### (Taking-out unit 36)

The taking-out unit 36 releases the neck portion 13 and the axially protruding portion 16 of the delamination container 20 manufactured by the blow molding unit 35 from the neck mold 37b and takes out the delamination container 20 to the outside of the blow molding apparatus 30.

### <Description of Method for Manufacturing Container>

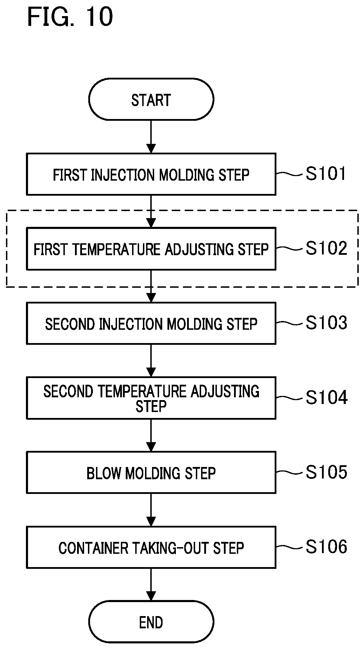

Next, a method for manufacturing the delamination container 20 with the blow molding apparatus 30 of the first embodiment will be described. Fig. 10 is a flowchart indicating steps of the method for manufacturing the delamination container 20.

### (Step S101: First injection molding step)

First, as illustrated in Fig. 7, in the first injection molding unit 31, the first resin material is injected from the first injection device 38 into the mold space formed by the cavity mold 40, the core mold 41, and the neck mold 37b to manufacture the outer layer 11 of the preform 10. At this time, the protruding portion 11a is formed in a region below the neck in an inner periphery of the outer layer 11 by a groove of the core mold 41.

In addition, in the first injection molding unit 31, as illustrated in Fig. 8, after the outer layer 11 of the preform 10 is molded, a step of protruding the valve pin 43 to a position close to the core mold 41 is performed. As a result, the thin film portion 11b having a thinner thickness than a peripheral portion is formed at a center of a bottom portion of the outer layer 11.

Thereafter, the molds of the first injection molding unit 31 are opened, and the outer layer 11 is released. When the molds of the first injection molding unit 31 are opened, the transfer plate 37a of the conveyance mechanism 37 moves by a predetermined angle in the rotation direction. As a result, the outer layer 11 of the preform 10 held by the neck mold 37b is conveyed to the first temperature adjusting unit 32 in a state of containing residual heat from injection molding.

### (Step S102: First temperature adjusting step)

Next, in the first temperature adjusting unit 32, the outer layer 11 of the preform 10 is accommodated in the temperature adjusting mold, and cooling of the outer layer 11 and adjustment of a temperature distribution (temperature equalization and removal of uneven temperature) are performed. Note that the first temperature adjusting step may be omitted.

After the first temperature adjusting step (or the first injection molding step), the transfer plate 37a of the conveyance mechanism 37 moves by a predetermined angle in the rotation direction. As a result, the temperature-adjusted outer layer 11 held in the neck mold 37b is conveyed to the second injection molding unit 33.

### (Step S103: Second injection molding step)

Subsequently, the outer layer 11 of the preform 10 is accommodated in the second injection molding unit 33, and the inner layer 12 is injection-molded.

In the second injection molding unit 33, as illustrated in Fig. 9, a mold space is formed between an inner periphery of the outer layer 11 and surfaces of the neck mold 37b and the core mold 51 facing the inner periphery and the neck mold 37b, and the second resin material is injected from the second injection device 39 into the mold space. Note that the thin film portion 11b is formed at a bottom portion of the outer layer 11, the thin film portion 11b is ruptured by injection pressure of the second resin material to form an opening portion 15a at the bottom portion, and the second resin material is guided from the opening portion 15a to an inner peripheral side of the outer layer 11.

In the second injection molding unit 33, the axially protruding portion 16 of the inner layer 12 and the flange 16a are integrally formed by the neck mold 37b and the core mold 51. In addition, the first rib 17a and the second rib 17b are each formed integrally on an outer periphery of the axially protruding portion 16 by the neck mold 37b. In addition, in the second injection molding unit 33, a groove portion 12a that receives the protruding portion 11a is formed in a region below the neck on an outer periphery of the inner layer 12 by the protruding portion 11a of the outer layer 11. A lower end (end on the other side) of the second rib 17b and an upper end surface (end on one side) of the neck portion 13 of the outer layer 11 are separated from each other. As a result, an outer peripheral surface (annular surface) of the axially protruding portion 16 without the second rib 17b is formed between the lower end of the second rib 17b and the upper end surface of the neck portion 13 of the outer layer 11.

Here, the temperature of the second resin material to be filled in the second injection molding unit 33 is set to a temperature lower than a melting point of the first resin material. The surface temperature of the outer layer 11 when the second resin material is filled in the second injection molding unit 33 is cooled to a temperature equal to or lower than a melting point of the second resin material.

In the second injection molding unit 33, the cavity mold 50 faces an outer peripheral side of the outer layer 11, and the shape of the outer layer 11 is held by the cavity mold 50 from the outer peripheral side. Therefore, in the second injection molding unit 33, thermal deformation of the outer layer 11 can be suppressed even if the second resin material comes into contact with the outer layer 11.

As described above, by the first injection molding step and the second injection molding step, the inner layer 12 is laminated on the inner peripheral side of the outer layer 11 to manufacture the preform 10 having the axially protruding portion 16.

Thereafter, the molds of the second injection molding unit 33 are opened, and the preform 10 is released. When the molds of the second injection molding unit 33 are opened, the transfer plate 37a of the conveyance mechanism 37 moves by a predetermined angle in the rotation direction. As a result, the preform 10 held by the neck mold 37b is conveyed to the second temperature adjusting unit 34 in a state of containing residual heat from injection molding.

### (Step S104: Second temperature adjusting step)

Subsequently, in the second temperature adjusting unit 34, the preform 10 is accommodated in a temperature adjusting mold unit, and temperature adjustment for bringing the temperature of the preform 10 close to a temperature suitable for final blow is performed. Thereafter, the transfer plate 37a of the conveyance mechanism 37 moves by a predetermined angle in the rotation direction. As a result, the temperature-adjusted preform 10 held in the neck mold 37b is conveyed to the blow molding unit 35.

### (Step S105: Blow molding step)

Subsequently, the delamination container 20 is blow-molded in the blow molding unit 35.

First, the blow cavity mold is closed, the preform 10 is accommodated in the mold space, and the air introduction member (blow core) is lowered, whereby the air introduction member comes into contact with the neck portion 13 of the preform 10. Then, the preform 10 is stretched in a lateral axis direction by lowering a stretching rod, holding the bottom portion 15 of the preform 10 from an inner surface, and performing longitudinal axis stretching as necessary, and supplying blow air from the air introduction member. As a result, the preform 10 is bulged and shaped so as to be in close contact with the mold space of the blow cavity mold, and is blow-molded into the delamination container 20.

### (Step S106: Container taking-out step)

When blow molding is finished, the blow cavity mold is opened. As a result, the delamination container 20 is movable from the blow molding unit 35.

Subsequently, the transfer plate 37a of the conveyance mechanism 37 moves by a predetermined angle in the rotation direction, and the delamination container 20 is conveyed to the taking-out unit 36. In the taking-out unit 36, the neck portion 13 and the axially protruding portion 16 of the delamination container 20 are released from the neck mold 37b, and the delamination container 20 is taken out to the outside of the blow molding apparatus 30.

Thus, one cycle in the method for manufacturing the delamination container ends. Thereafter, the transfer plate 37a of the conveyance mechanism 37 moves by a predetermined angle in the rotation direction, and the steps of S101 to S106 described above are repeated. Note that during operation of the blow molding apparatus 30, six sets of the delamination containers 20 having a time difference of one step are manufactured in parallel.

In addition, due to the structure of the blow molding apparatus 30, waiting times of the first injection molding step, the first temperature adjusting step, the second injection molding step, the second temperature adjusting step, the blow molding step, and the container taking-out step are the same. Similarly, a conveyance time between the steps is the same.

Hereinafter, effects of the first embodiment will be described.

In the first embodiment, the outer layer 11 of the preform 10 is molded in the first injection molding step, and the inner layer 12 is injection-molded from the opening portion 15a of the outer layer 11 on the inner side of the outer layer 11 in the second injection molding step to manufacture the preform 10 having a two-layer structure. According to the first embodiment, injection molding of the inner layer is continuously performed while the outer layer has residual heat from injection molding, and the preform 10 having a two-layer structure suitable for specifications of the delamination container 20 can be manufactured. In the first embodiment, since the preform 10 having a two-layer structure is released in a state where both the outer layer and the inner layer have heat retained during injection molding, it is possible to obtain the preform 10 suitable for manufacturing the delamination container 20 by a hot parison type blow molding method.

Then, in the first embodiment, the above preform 10 having a two-layer structure is subjected to stretch blow molding in a state of having residual heat from injection molding to manufacture the delamination container 20. Therefore, in the first embodiment, the delamination container 20 having excellent aesthetic appearance, physical property strength, and the like can be manufactured by a hot parison type blow molding method. As compared with cold parison type blow molding, in the first embodiment, it is not necessary to cool the manufactured preform 10 to near normal temperature, and a step of reheating the preform 10 is also unnecessary. Therefore, according to the first embodiment, a series of steps from injection molding of the preform 10 to blow molding of the delamination container 20 can be completed in a relatively short time. That is, in the first embodiment, the delamination container 20 can be mass-produced from the resin material in a shorter manufacturing cycle (manufacturing time) as compared with the cold parison method in which two preforms need to be separately manufactured.

In addition, in the delamination container 20 of the first embodiment, the axially protruding portion 16 in which the inner layer protrudes outward further than the outer layer is formed in the neck portion 13. Then, in the delamination container 20 of the first embodiment, a gap is formed between the outer layer and the inner layer of the neck portion 13 by pushing the axially protruding portion 16 at the time of attaching the cap, and outside air can flow into a space between the outer layer and the inner layer from the neck portion 13 side.

As a result, in the delamination container 20 of the first embodiment, a stretch ratio of the bottom portion 15 can be increased as compared with that in a case where a vent is formed in the bottom portion 15, and the thickness of the bottom portion 15 can be reduced. By reducing the thickness of the bottom portion 15, the inner layer container can be easily pulled out from the neck portion 13 of the outer layer, and the inner layer and the outer layer can be easily separated from each other at the time of recycling. Note that, in the first embodiment, since the stretch ratio of the bottom portion can be increased, restriction on the thickness distribution of the preform 10 is also reduced.

In addition, in the first embodiment, by providing the second rib 17b on the outer periphery of the axially protruding portion 16, the second rib 17b expands the gap when the axially protruding portion 16 is pushed, and the gap between the outer layer and the inner layer of the neck portion 13 is held by the second rib 17b. This makes it possible to reliably form the gap between the outer layer and the inner layer of the neck portion 13 when the axially protruding portion 16 is pushed.

In addition, in the first embodiment, the flange 16a is formed on the axially protruding portion 16, and the first rib 17a is provided on a lower surface of the flange 16a. As a result, when the axially protruding portion 16 is pushed, the first rib 17a is sandwiched between an end portion of the outer layer and the flange 16a, whereby a ventilation passage communicating with the gap of the neck portion 13 can be ensured between the end portion of the outer layer and the flange 16a.

Note that, in the configuration of the first embodiment, since the ventilation passage is formed by pushing the axially protruding portion 16 after blow molding, it is not necessary to form a vent in the preform 10 during injection molding. Therefore, it is not necessary to add a movable mold for forming the vent to the injection molding mold, and therefore manufacturing cost of the delamination container 20 can be suppressed.

### <<Second Embodiment>>

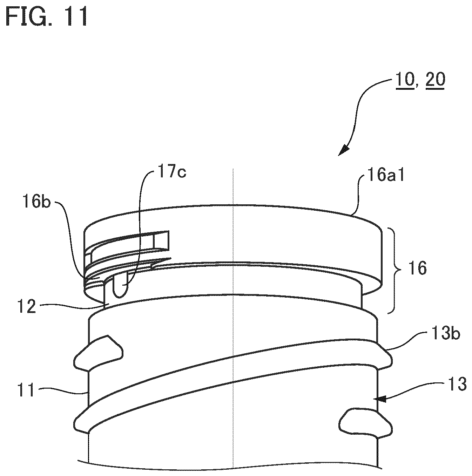

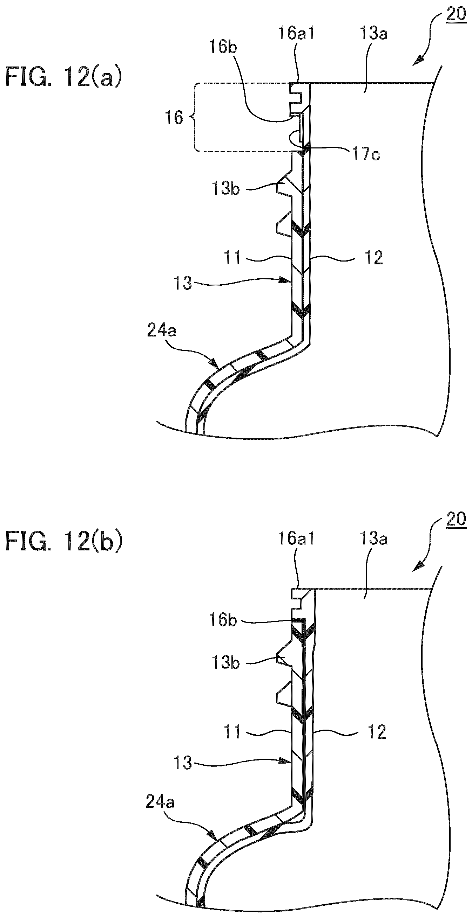

**Fig.** 11 is a perspective view illustrating the shape of a neck portion of a preform 10 and a delamination container 20 of a second embodiment. **Fig.** 12(a) is a cross-sectional view illustrating the vicinity of the neck portion of the delamination container **20,** and **Fig.** 12(b) is a view illustrating a state where an inner layer is pushed in an axial direction from **Fig.** 12(a). Note that the second embodiment is a modification of the first embodiment, and similar components to those of the first embodiment are denoted by the same reference numerals, and redundant description is omitted. A manufacturing method and a manufacturing apparatus of the second embodiment are similar to those of the first embodiment. The second embodiment is different from the first embodiment in a structure of an axially protruding portion 16 of an inner layer 12 in the preform or the delamination container and a structure of a mold forming this portion.

A neck portion 13 of the preform 10 and the delamination container 20 of the second embodiment has the axially protruding portion 16 in which the inner layer 12 on an inner peripheral side protrudes to one side further than an end portion of an outer layer 11 on an outer peripheral side. Therefore, the axial length of the neck portion in the inner layer 12 is longer than the axial length of the neck portion of the outer layer 11 by the amount of the axially protruding portion 16. Note that a portion of the neck portion 13 of the inner layer 12, the portion being injection-molded in close contact with the outer layer, is an example of the first region, and the axially protruding portion 16 is an example of the second region.

An annular flange 16a1 protruding radially outward is formed in a one-side end portion of the axially protruding portion 16 in the second embodiment. The flange 16a1 forms an annular stepped portion extending in a circumferential direction on one side of the inner layer 12, and is formed thicker than the other portion of the inner layer 12.

A cutout 16b recessed to one side (upper side in the drawing) is formed on a surface (lower surface) on the other side of the flange 16a1. One or more cutouts 16b, preferably two or more cutouts 16b are formed partially in a circumferential direction of the flange 16a1, and are formed so as to extend in a radial direction of the flange 16a1. When two or more cutouts 16b are formed, the plurality of cutouts 16b are preferably formed at equal intervals on the surface (lower surface) on the other side of the flange 16a1. When two cutouts 16b are formed, for example, two cutouts 16b may be formed on the surface (lower surface) on the other side of the flange 16a1 facing a center of a mouth portion 13a.

In addition, a rib 17c is formed on the other side of the flange 16a1 on the outer periphery of the axially protruding portion 16. The rib 17c is an example of a protruding body, and extends in an axial direction at a position on the other side of the lower surface of the flange 16a1 on the outer periphery of the axially protruding portion 16. One or more ribs 17c are partially formed in a circumferential direction of the axially protruding portion 16, and for example, a plurality of the ribs 17c are formed on the outer periphery of the axially protruding portion 16 at regular intervals in the circumferential direction. Two or more ribs 17c may be formed at equal intervals on the outer periphery of the axially protruding portion 16. In particular, it is preferable to form four or more ribs 17c at equal intervals on the outer periphery of the axially protruding portion 16. A lower end (end on the other side) of the rib 17c and an upper end surface (end on one side) of the neck portion 13 of the outer layer 11 are separated from each other. As a result, an outer peripheral surface (annular surface) of the axially protruding portion 16 without the rib 17c is formed between the lower end of the rib 17c and the upper end surface of the neck portion 13 of the outer layer 11.

Note that an inclined surface or a curved surface in which the radial protrusion amount of the rib increases from the other side toward one side (from a lower side to an upper side in Fig. 1) may be formed on the other side (lower end side) of the rib 17c. In addition, the width (diameter) of the rib 17c in the circumferential direction may increase from the other side toward one side (from a lower side to an upper side in Fig. 1). The rib 17c may have a shape extending obliquely and inclined from an axial direction.

The positions of one or more ribs 17c in the circumferential direction overlap the positions of the cutouts 16b in the circumferential direction. When there is a plurality of cutouts 16b, the ribs 17c whose number is the same as the number of the cutouts 16b are preferably provided so as to overlap the cutouts 16b at positions in the circumferential direction. Note that all the ribs 17c do not need to be formed at positions overlapping the cutouts 16c.

As illustrated in Fig. 12(a), in the delamination container 20 after blow molding, the outer layer 11 and the inner layer 12 of the neck portion 13 are in close contact with each other. Then, a cap (not illustrated) that seals the inner layer 12 and includes a check valve is attached to the neck portion 13 of the delamination container 20 via a thread 13b of the outer layer 11.

When the cap is attached to the neck portion 13, the cap is screwed to the thread 13b of the outer layer 11. As a result, as illustrated in Fig. 12(b), the flange 16a1 is pressed from an upper side toward the other side by the cap (not illustrated), and the axially protruding portion 16 of the inner layer 12 is pushed toward the outer layer 11. Note that the axially protruding portion 16 is pushed until a surface (lower surface) on the other side of the flange 16a1 comes into contact with an end surface (top surface) of the outer layer 11.

On the other hand, since contents are filled into the inner layer 12 of the delamination container 20, the inner layer 12 that receives internal pressure of the contents bulges outward. As a result, in a shoulder portion 24a of the delamination container 20, the inner layer 12 comes into contact with the outer layer 11 by internal pressure of the contents, and generates a reaction force against a force of pushing the flange 16a1. Note that, in the second embodiment, as in the first embodiment, a protruding portion 24a1 of the outer layer 11 and a groove portion 24a2 of the inner layer 12 may be formed in the shoulder portion 24 of the delamination container 20.

In the delamination container 20 of the second embodiment, when the axially protruding portion 16 of the inner layer 12 is pushed into the other side with respect to the outer layer 11 of the neck portion 13 with a certain force or more, the rib 17c is inserted into the outer layer 11 together with the axially protruding portion 16. At this time, as in the first embodiment, the rib 17c comes into contact with an inner periphery of the outer layer 11, whereby the axially protruding portion 16 is pushed toward an inner diameter side and is slightly narrowed, and is displaced such that a cross section thereof has an elliptical shape. As a result, peeling between the outer layer 11 and the inner layer 12 starts from one side in the neck portion 13 of the delamination container 20. When the axially protruding portion 16 is further pushed from the above state, peeling between the outer layer 11 and the inner layer 12 spreads downward (near the shoulder portion 24a of the delamination container 20), the inner layer 12 bends inward at a boundary between the neck portion 13 and the shoulder portion 24a, and peeling is completed.

On the other hand, when the axially protruding portion 16 is pushed in the axial direction, a surface (lower surface) on the other side of the flange 16a1 comes into contact with a surface (upper end surface, top surface) on one side of the outer layer 11. At this time, at the position of the cutout 16b of the flange 16a1, a gap extending in a radial direction is formed between the flange 16a1 and the outer layer 11. The gap formed by the cutout 16b communicates with a gap generated by the above peeling between the outer layer 11 and the inner layer 12 to form a ventilation passage. As described above, in the second embodiment, by pushing the flange 16a1 toward the other side, it is possible to form a ventilation passage through which outside air is introduced between the outer layer 11 and the inner layer 12 in the neck portion 13 of the delamination container **20.**

Note that, in the second embodiment, since rigidity of the annular flange 16a1 is higher than that of the other portion of the inner layer 12 and the flange 16a1 is less likely to be deformed, the flange 16a1 is pressed substantially uniformly in the circumferential direction by the cap, and the axially protruding portion 16 tends to be directly lowered. Therefore, the inner layer 12 and the outer layer 13 are more reliably peeled from each other in the neck portion 13.

The present invention is not limited to the above embodiments, and various improvements and design changes may be made without departing from the gist of the present invention.

In the above embodiments, the example has been described in which the protruding portion 11a is formed on the inner peripheral side of the outer layer 11 and the groove portion 12a is formed on the outer peripheral side of the inner layer 12 in the region below the neck of the preform 10. However, the relationship between the groove and the protrusion may be reversed, and a groove portion may be formed on the inner peripheral side of the outer layer 11 and a protruding portion may be formed on the outer peripheral side of the inner layer 12 in the region below the neck of the preform 10.

In addition, the embodiments disclosed herein are to be considered in all respects as illustrative and not restrictive. The scope of the present invention is indicated not by the above description but by the claims, and is intended to include meanings equivalent to the claims and all modifications within the scope.

### Reference Signs List

- 10: preform
- 11: outer layer
- 12: inner layer
- 13: neck portion
- 14: body portion
- 15: bottom portion
- 16: axially protruding portion
- 16a, 16a1: flange
- 16b: cutout
- 17a: first rib
- 17b: second rib
- 17c: rib
- 20: delamination container
- 24: body portion
- 24a: shoulder portion
- 24a1: protruding portion
- 24a2: groove portion
- 25: bottom portion
- 30: blow molding apparatus
- 31: first injection molding unit
- 32: first temperature adjusting unit
- 33: second injection molding unit
- 34: second temperature adjusting unit
- 35: blow molding unit

## Claims

1. A delamination container comprising a neck portion opened on one side and a bottomed cylindrical body portion connected to the neck portion, an inner layer being laminated on an inner side of an outer layer, wherein
the neck portion of the inner layer includes:
a first region that is injection-molded in close contact with an inner periphery of the neck portion of the outer layer;
a second region that is formed on the one side of the first region and is injection-molded in a state of protruding from the neck portion of the outer layer; and
a protruding body that is formed on an outer periphery of the second region and peels off the inner layer and the outer layer from each other from one side of the neck portion when the second region is pushed to the other side toward the neck portion of the outer layer.

2. The delamination container according to claim **1,** wherein
the protruding body comes into contact with an inner surface of the outer layer and displaces the inner layer in a direction away from the outer layer when the second region is pushed to the other side toward the neck portion of the outer layer, and holds a gap between the outer layer and the inner layer.

3. The delamination container according to claim **2,** wherein
the neck portion of the inner layer further includes:
a flange that is formed on one side of the second region and protrudes radially outward; and
a spacer formed on a surface on the other side of the flange and partially disposed in a circumferential direction of the second region, and
the spacer comes into contact with an end portion on one side of the outer layer when the second region is pushed into the neck portion of the outer layer, and holds a ventilation passage communicating with the gap between the flange and the outer layer.

4. The delamination container according to claim **2,** wherein
the neck portion of the inner layer further includes a flange that is formed on one side of the second region and protrudes radially outward,
a cutout recessed toward one side of the flange and extending in a radial direction of the flange is formed on a surface on the other side of the flange, and
the flange comes into contact with an end portion on one side of the outer layer when the second region is pushed into the neck portion of the outer layer, and the cutout forms a ventilation passage communicating with the gap between the flange and the outer layer.

5. The delamination container according to any one of claims 1 to **4,** wherein
the delamination container further includes a shoulder portion that connects the neck portion and the body portion, and
the shoulder portion includes a slip preventing portion that receives the inner layer moving to the other side when the second region is pushed into the neck portion of the outer layer.

6. The delamination container according to claim **5,** wherein
the slip preventing portion includes:
a protrusion formed on an inner periphery of the outer layer and extending in an axial direction; and
a groove formed on an outer periphery of the inner layer and extending in the axial direction.

7. A preform for forming a delamination container including a neck portion opened on one side and a bottomed cylindrical body portion connected to the neck portion, an inner layer being laminated on an inner side of an outer layer, wherein
the neck portion of the inner layer includes:
a first region that is injection-molded in close contact with an inner periphery of the neck portion of the outer layer;
a second region that is formed on the one side of the first region and is injection-molded in a state of protruding from the neck portion of the outer layer; and
a protruding body that is formed on an outer periphery of the second region and peels off the inner layer and the outer layer from each other from one side of the neck portion when the second region is pushed to the other side toward the neck portion of the outer layer.

8. A method for manufacturing a delamination container including a neck portion opened on one side and a bottomed cylindrical body portion connected to the neck portion, the method comprising:
a first injection molding step of injection-molding the outer layer of the bottomed cylindrical preform with a first resin material;
a second injection molding step of injecting a second resin material different from the first resin material and laminating the inner layer on an inner side of the outer layer; and
a blow molding step of blow-molding the preform obtained in the second injection molding step in a state of having residual heat from injection molding to manufacture a delamination container, wherein
the neck portion of the inner layer includes:
a first region that is injection-molded in close contact with an inner periphery of the neck portion of the outer layer;
a second region that is formed on the one side of the first region and is injection-molded in a state of protruding from the neck portion of the outer layer; and
a protruding body that is formed on an outer periphery of the second region and peels off the inner layer and the outer layer from each other from one side of the neck portion when the second region is pushed to the other side toward the neck portion of the outer layer.

9. An apparatus for manufacturing a delamination container including a neck portion opened on one side and a bottomed cylindrical body portion connected to the neck portion, the apparatus comprising:
a first injection molding unit that injection-molds the outer layer of the bottomed cylindrical preform with a first resin material;
a second injection molding unit that injects a second resin material different from the first resin material and laminates the inner layer on an inner side of the outer layer; and
a blow molding unit that blow-molds the preform obtained in the second injection molding unit in a state of having residual heat from injection molding to manufacture a delamination container, wherein
the neck portion of the inner layer includes:
a first region that is injection-molded in close contact with an inner periphery of the neck portion of the outer layer;
a second region that is formed on the one side of the first region and is injection-molded in a state of protruding from the neck portion of the outer layer; and
a protruding body that is formed on an outer periphery of the second region and peels off the inner layer and the outer layer from each other from one side of the neck portion when the second region is pushed to the other side toward the neck portion of the outer layer.
